# EUROPEAN PATENT APPLICATION

(11) **EP 4 834 828 A1**
(43) Date of publication of application: **04.11.2026**
(21) Application number: 24913134.3
(22) Date of filing: 27.12.2024
(51) Int. Cl.: C01B 17/26, C01B 17/28

(54) **LITHIUM SULFIDE PRODUCTION METHOD**

(30) Priority: 27.12.2023 JP 2023220533
(71) Applicant: Mitsui Kinzoku Company, Limited, Tokyo 141-8584 (JP)
(72) Inventor: HAMADA, Shoma, Ageo-shi, Saitama 362-0021 (JP); MATSUSHITA, Takayuki, Ageo-shi, Saitama 362-0021 (JP); TAJIMA, Taketoshi, Ageo-shi, Saitama 362-0021 (JP); KAWAMURA, Takeru, Ageo-shi, Saitama 362-0021 (JP)
(74) Representative: Novagraaf Technologies
(86) International application number: PCT/JP2024/046468
(87) International publication number: WO 2025/143248

(57) **Abstract**

A method for producing lithium sulfide of the present invention includes: a mixing step of preparing a powder mixture containing solid lithium hydroxide, solid sulfur, and a reducing agent containing a carbon element; and a firing step of firing the powder mixture at a temperature of 600°C to 1200°C in an inert or reducing gas atmosphere. During the firing step, gas accumulation suppressing treatment is performed to suppress accumulation of gas generated during the firing step within the powder mixture. **It** is preferable that the gas accumulation suppressing treatment is performed at 120°C to 1200°C.

## Description

### Technical Field

The present invention relates to a method for producing lithium sulfide.

### Background Art

In recent years, secondary batteries have attracted attention as part of efforts to prevent global warming by reducing carbon dioxide. Among these, solid-state batteries are expected to be practically implemented as batteries that combine safety and high energy density. Sulfide solid electrolytes are known as one type of solid electrolyte used in solid-state batteries. Sulfide solid electrolytes are produced, for example, using lithium sulfide as a raw material. Patent Literature 1 discloses a lithium sulfide production method including a firing step of firing a mixture of solid lithium hydroxide and solid sulfur in the presence of a reducing agent at 600°C to 1200°C to obtain lithium sulfide. This literature describes that the method according to the literature can produce lithium sulfide without using organic solvents or gaseous sulfur sources, with fewer process steps, and with a low content of impurity phases.

### Citation List

### Patent Literature

Patent Literature 1: JP 2014-169196A

### Summary of Invention

However, as a result of investigation by the present inventors, it was found that the production method described in Patent Literature 1 did not provide a sufficiently high yield of lithium sulfide.

As a result of further investigation by the present inventors, it was found that according to the production method described in Patent Literature 1, during firing, the raw materials and reaction products tend to overflow from containers such as saggars, and this leads to a decrease in the yield of lithium sulfide.

The present invention was made based on these findings, and provides a method for producing lithium sulfide, comprising:
a mixing step of preparing a powder mixture containing solid lithium hydroxide, solid sulfur, and a reducing agent containing a carbon element; and
a firing step of firing the powder mixture in an inert or reducing gas atmosphere,
wherein during the firing step, gas accumulation suppressing treatment is performed to suppress accumulation of gas generated during the firing step within the powder mixture.

### Brief Description of Drawings

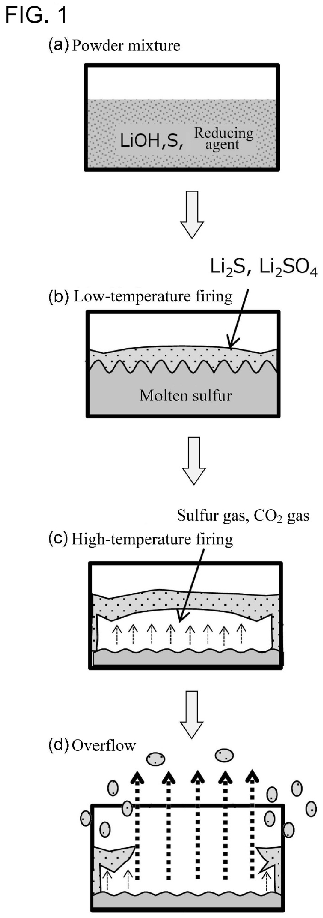

[FIG. 1] Figs. 1(a) to 1(d) illustrate inconveniences that may arise in conventional lithium sulfide production methods using lithium hydroxide as a starting material.

### Description of Embodiments

Hereinafter, the present invention will be described based on its preferred embodiments. The lithium sulfide production method according to the present invention is roughly divided into the following steps: (i) a mixing step and (ii) a firing step.
(i) Mixing Step
   Prepare a powder mixture containing solid lithium hydroxide, solid sulfur, and a reducing agent containing a carbon element
(ii) Firing Step
   Fire the powder mixture obtained in the mixing step in an inert or reducing gas atmosphere
   Each step will be described in detail below.

### (i) Mixing Step

In this step, lithium hydroxide is used as a starting material for producing lithium sulfide. Lithium sulfate may also be used instead of lithium hydroxide as a starting material for producing lithium sulfide. However, lithium sulfate is more expensive than lithium hydroxide, and thus lithium hydroxide is used as the starting material in this step.

The lithium hydroxide used in this step is solid. "Solid lithium hydroxide" is to exclude lithium hydroxide in an aqueous solution form. Therefore, lithium hydroxide that has absorbed water from the air falls under the category of solid lithium hydroxide. Anhydrous and hydrated lithium hydroxide are known, and either of them may be used as the lithium hydroxide used in this step as long as it is solid.

There is no particular limitation on the particle size of the lithium hydroxide. The present invention produces lithium sulfide by a solid-phase reaction, and thus from this viewpoint, the volume-based cumulative particle size D₅₀ of lithium hydroxide at 50% cumulative volume as measured by laser diffraction scattering particle size distribution measurement is, for example, preferably 1 µm or more, more preferably 10 µm or more, and even more preferably 100 µm or more. Meanwhile, the volume-based cumulative particle size D₅₀ of lithium hydroxide is, for example, preferably 1000 µm or less, more preferably 800 µm or less, even more preferably 600 µm or less, and even more preferably 200 µm or less.

There is no particular limitation on the solid sulfur used in this step, and, for example, α-sulfur or β-sulfur may be used. The crystal system of sulfur does not affect the properties of the obtained lithium sulfide, and thus sulfur with other crystal systems may also be used.

There is no particular limitation on the particle size of sulfur. The present invention produces lithium sulfide by a solid-phase reaction as described above, and thus from this viewpoint, the volume-based cumulative particle size D₅₀ of sulfur at 50% cumulative volume as measured by laser diffraction scattering particle size distribution measurement is, for example, preferably 1 µm or more, more preferably 10 µm or more, and even more preferably 100 µm or more. Meanwhile, the volume-based cumulative particle size D₅₀ of sulfur is, for example, preferably 1000 µm or less, more preferably 800 µm or less, even more preferably 600 µm or less, and even more preferably 200 µm or less.

The reducing agent used in this step is employed to promote conversion of lithium sulfate, which is generated as a byproduct during lithium sulfide formation from lithium hydroxide, into lithium sulfide. From this viewpoint, it is preferable that the reducing agent contains a carbon element. From this viewpoint, it is preferable that the reducing agent is elemental carbon or a carbon-containing reducing organic compound.

Examples of elemental carbon used as the reducing agent include various carbon materials such as carbon black, graphite, carbon fibers, and activated carbon. These carbon materials may be used alone or in a combination of two or more. The volume-based cumulative particle size D₅₀ of these reducing agents at 50% cumulative volume as measured by laser diffraction scattering particle size distribution measurement is, for example, preferably 0.1 µm or more, more preferably 1 µm or more, more preferably 10 µm or more, and even more preferably 90 µm or more. Meanwhile, the volume-based cumulative particle size D₅₀ of the reducing agents is, for example, preferably 1000 µm or less, more preferably 300 µm or less, and even more preferably 150 µm or less. The reducing agents with a smaller volume-based cumulative particle size D₅₀ have a larger contact area when mixed with the raw materials, enabling more efficient reduction.

Examples of the carbon-containing reducing organic compound include reducing sugars, polyhydric alcohols, and organic acids.

The reducing sugars may be, for example, glucose, sucrose, fructose, lactose, or the like. Among these reducing sugars, it is preferable to use glucose for easier control of the reduction reaction.

The polyhydric alcohols may be ethylene glycol, propylene glycol, glycerin, or the like. In particular, it is preferable to use ethylene glycol, diethylene glycol, triethylene glycol, tetraethylene glycol, 1,2-propanediol, dipropylene glycol, 1,2-butanediol, 1,3-butanediol, 1,4-butanediol, 2,3-butanediol, 1,5-pentanediol, polyethylene glycol, or the like. These polyhydric alcohols may be used alone or in a combination of two or more.

Among these polyols, it is preferable to use ethylene glycol for its high reducing performance due to a large proportion of hydroxyl groups relative to its molecular weight and for ease of handling due to its liquid state at room temperature.

The organic acids may be malonic acid, succinic acid, glycolic acid, lactic acid, malic acid, tartaric acid, or the like.

Among the various reducing agents mentioned above, it is particularly preferable to use at least one selected from the group consisting of carbon black, graphite, carbon fibers, activated carbon, a reducing sugar, and a polyhydric alcohol, for their high reducing ability.

In this step, the amount of sulfur atoms used per mole of lithium atoms is, for example, preferably 0.5 mol or more, more preferably 1.0 mol or more, and even more preferably 1.5 mol or more. Meanwhile, the amount of sulfur atoms used per mole of lithium atoms is, for example, preferably 10 mol or less, more preferably 7.0 mol or less, and even more preferably 4.0 mol or less. If the amount of sulfur atoms used per mole of lithium atoms falls within this range, it is possible to obtain high-purity lithium sulfide. Furthermore, it is possible to achieve effects such as reducing production costs, increasing yield, and lowering the burden of equipment maintenance.

The amount of reducing agent used is preferably 0.05 or more, more preferably 0.1 or more, and even more preferably 0.2 or more, calculated in terms of carbon atoms, for example, expressed in molar ratio of carbon atoms per mole of lithium atoms. If the amount of reducing agent is set to this range, it is possible to suppress residual lithium sulfate.

Furthermore, in this step, the amount of reducing agent is preferably 0.5 or less, more preferably 0.45 or less, and even more preferably 0.4 or less, calculated in terms of carbon atoms, for example, expressed in molar ratio of carbon atoms per mole of lithium atoms. If the amount of reducing agent is set to this range, it is possible to suppress residual reducing agent. As a result, if the amount of reducing agent per mole of lithium atoms is set to this range, it is possible to obtain high-purity lithium sulfide.

In this step, there is no particular limitation on the means for mixing solid lithium hydroxide, solid sulfur, and a reducing agent containing a carbon element. Dry mixing or wet mixing may be used as the mixing. Dry mixing may be performed using, for example, an apparatus such as a high-speed mixer, a super mixer, a turbo-sphere mixer, a Henschel mixer, a Nauta mixer, a ribbon blender, or a V-type mixer. The uniform mixing operations are not limited to the mechanical means given as examples above. When necessary, particle size adjustment may be performed by subjecting the material to pulverization using a jet mill or the like, before or after mixing. Wet mixing may be performed using, for example, a ball mill, a disperser mill, a homogenizer, a vibrating mill, a sand grind mill, an attritor, or the like. There is no particular limitation on the type of liquid medium used for wet mixing, as long as it does not affect the above-described three components.

Through the above operations, a powder mixture containing the above-described three components can be obtained. In some cases, in addition to the three components, other components may also be added to prepare the powder mixture.

### (ii) Firing step

In this step, the powder mixture obtained in the mixing step is subjected to firing. Firing can be performed by filling the powder mixture in, for example, a saggar and heating it in a kiln. In this specification, "firing" means the heating period from the start of heating of the mixed powder at room temperature to the production of lithium sulfide, which is a target substance. During firing, it is not necessary for the mixture to be continuously heated. That is, it is also possible to interrupt the heating in the middle of the firing to allow the mixture to temporarily cool to room temperature, and then to resume the heating to produce lithium sulfide, which is a target substance. Such an operation is also encompassed within "firing" in this specification.

Firing may be performed in an inert or reducing gas atmosphere. Examples of inert gas for use in firing include nitrogen gas, as well as noble gases such as helium, argon, and neon. Examples of reducing gas for use in firing include hydrogen gas, hydrogen gas diluted with an inert gas, carbon monoxide gas, and hydrogen sulfide gas.

The maximum temperature reached during firing is, for example, preferably 1200°C or lower, more preferably 1100°C or lower, and even more preferably 1000°C or lower. If the maximum temperature reached is set at or below the above-described temperature, it is possible to suppress the formation of impurity phases other than lithium sulfide. Meanwhile, the maximum temperature reached during firing is, for example, preferably 600°C or higher, more preferably 700°C or higher, and even more preferably 800°C or higher. If the maximum temperature reached is set at or above the above-described temperature, it is possible to reliably produce lithium sulfide. The duration for maintaining the maximum temperature reached can be appropriately adjusted to ensure reliable production of lithium sulfide from lithium hydroxide, which is a raw material.

The present inventors believe that the reactions in this step differ between the low-temperature firing zone and the high-temperature firing zone, and they proceed in the following two stages.
- Low-temperature firing zone

   8LiOH+4S → 3Li₂S+Li₂SO₄+4H₂O (1)
- High-temperature firing zone

   Li₂SO₄+2C → Li₂S+2CO₂ (2)

Therefore, the overall reaction is as follows.

8LiOH+4S+2C → 4Li₂S+4H₂O+2CO₂ (3)

As a result of investigation by the present inventors, it was found that the low-temperature firing zone where the reaction in Chemical Equation (1) occurs most efficiently is up to about 500°C or lower, and the high-temperature firing zone where the reaction in Chemical Equation (2) occurs is about 500°C or higher.

As a result of further investigation on Chemical Equations (1) and (2) by the present inventors, it was found that as shown in FIG. 1, in the low-temperature firing zone where Chemical Equation (1) occurs, lithium hydroxide reacts with sulfur to form lithium sulfide (mp = 938°C) and lithium sulfate (mp = 859°C), both of which are substances with high melting points. These substances are thought to form a film-like layer on top of the powder mixture containing molten sulfur (mp = 122°C) (see FIG. 1(b)).

Meanwhile, in the high-temperature firing zone where Chemical Equation (2) occurs, sulfur gas (bp = 445°C) and CO₂ gas accumulate within the space defined by the film containing lithium sulfide and lithium sulfate, causing the internal pressure of this space to increase (see FIG. 1(c)).

When the internal pressure of the space increases and the film can no longer withstand the pressure, the film breaks, causing the raw materials containing molten sulfur to scatter or overflow (see FIG. 1(d)).

In this manner, when producing lithium sulfide from lithium hydroxide, there is a risk of scattering or overflow of the raw materials during the process. This results in a decrease in the yield of lithium sulfide, which is a target substance. Therefore, in this production method, gas accumulation suppressing treatment to suppress accumulation of gases such as sulfur gas and CO₂ gas generated during the firing step within the powder mixture is performed during the firing step, thereby suppressing the scattering and overflow of the raw materials.

As an example of the gas accumulation suppressing treatment, when a film of lithium sulfide and/or lithium sulfate is formed on the upper surface of the powder mixture containing molten sulfur in the low-temperature firing zone shown in FIG. 1(b) during the (A) firing step, it is advantageous to remove gases such as sulfur gas and CO₂ gas from within the powder mixture covered by the film by breaking at least a portion of the film. Breaking this film can effectively suppress the scattering or overflow of the raw materials as shown in FIG. 1(d).

When performing the operation (A), it is possible to perform grinding or disintegration treatment on the film in order to break at least a portion of the film. For example, a device for grinding or disintegrating the film may be installed within the reaction system, and the film may be broken by this device.

As another example of the gas accumulation suppressing treatment, it is also advantageous to suppress the formation of a film of lithium sulfide and/or lithium sulfate on the upper surface of the powder mixture during the (B) firing step. This operation prevents the formation of the aforementioned film in advance. Therefore, this operation can also effectively suppress the scattering or overflow of the raw materials as shown in FIG. 1(d).

When performing the operation (B), it is preferable to agitate the powder mixture before the aforementioned film forms, thereby preventing the formation of the film. For this purpose, vibration can be applied to the powder mixture continuously or discontinuously. Furthermore, the powder mixture can be agitated by rotating agitator blades, or film formation can be suppressed by blowing gas.

The operations (A) and (B) are preferably performed at temperatures of, for example, 120°C to 1200°C. It is particularly preferable to perform these operations in the low-temperature firing zone, which is a temperature zone where a film is formed. From this viewpoint, the operations (A) and (B) are performed at preferably 120°C or higher, more preferably 150°C or higher, and even more preferably 180°C or higher, within the low-temperature firing zone. Furthermore, the operations (A) and (B) are performed at preferably 500°C or lower, more preferably 450°C or lower, and even more preferably 420°C or lower, within the low-temperature firing zone. The operation (A) or (B) may be performed not only in these temperature zones but also throughout the entire firing step (i.e., from the start of heating to the completion of lithium sulfide production).

From an economic viewpoint, it is preferable to perform the operation (A) or (B) in the low-temperature firing zone and not to perform the operation (A) or (B) in the high-temperature firing zone.

As another method, with respect to the operation (A) described above, when a film is formed in the low-temperature firing zone, it is possible to temporarily cool the reaction system to room temperature and then break the film, and then to resume the firing (i.e., firing through both the low-temperature firing zone and the high-temperature firing zone). Performing the operation (A) in this manner is advantageous in that the lithium sulfate within the film and the reducing agent can be uniformly mixed again, thereby promoting the reaction. Furthermore, as a result of the progress of Chemical Equation (1), the entire mixture is cooled and returned to a solid state with reduced amounts of sulfur and lithium hydroxide, which are substances with low melting points, which is advantageous in that upon reheating, the fired material is less likely to become liquid, and a film is less likely to be formed in the first place.

When performing the operation (A) or (B) in the low-temperature firing zone, it is possible to keep the reaction system at the aforementioned temperature for 1 hour or longer, 2 hours or longer, or 3 hours or longer. Furthermore, it is possible to keep the reaction system at the aforementioned temperature for 10 hours or shorter, 9 hours or shorter, or 8 hours or shorter.

**The** lithium sulfide obtained through the above-described operation can be subjected to a pulverization step and a sieving step as post-treatment to produce a powder having an appropriate particle size distribution.

**The** lithium sulfide obtained by this production method is useful, for example, as a raw material for sulfide solid electrolytes in lithium-ion batteries. For example, solid electrolytes such as Li₇P₃S₁₁ and LiPS₄ can be synthesized, for example, by mechanically milling lithium sulfide with phosphorus pentasulfide (P₂S₅) or other sulfides. Alternatively, crystalline solid electrolytes, such as solid electrolytes having a crystalline phase with an argyrodite crystal structure, can be synthesized by firing a mixture of lithium sulfide, phosphorus pentasulfide, and lithium halides such as lithium chloride (LiCl) and/or lithium bromide (LiBr) in an inert gas atmosphere or a hydrogen sulfide atmosphere.

**The** substances reacted with lithium sulfide to synthesize the solid electrolyte are not particularly limited. Examples thereof include in addition to the aforementioned phosphorus pentasulfide, silicon sulfide (SiS₂), germanium sulfide (GeS₂), and the like.

Regarding the above-described embodiment, the present invention further discloses the following method for producing lithium sulfide.
(1) A method for producing lithium sulfide, comprising:
   a mixing step of preparing a powder mixture containing solid lithium hydroxide, solid sulfur, and a reducing agent containing a carbon element; and
   a firing step of firing the powder mixture in an inert or reducing gas atmosphere,
   wherein during the firing step, gas accumulation suppressing treatment is performed to suppress accumulation of gas generated during the firing step within the powder mixture.
(2) **The** method for producing lithium sulfide according to claim 1, wherein the gas accumulation suppressing treatment is either:
   A: breaking at least a portion of a film of lithium sulfide and/or lithium sulfate formed on an upper surface of the powder mixture during the firing step, thereby removing the gas from within the powder mixture covered by the film; or
   B: suppressing formation of a film of lithium sulfide and/or lithium sulfate on the upper surface of the powder mixture during the firing step.
(3) **The** method for producing lithium sulfide according to (1) or (2), wherein the gas accumulation suppressing treatment is either:
   a: performing grinding or disintegration treatment on a film of lithium sulfide and/or lithium sulfate formed on an upper surface of the powder mixture during the firing step, thereby breaking at least a portion of the film; or
   b: agitating the powder mixture during the firing step, thereby suppressing formation of a film of lithium sulfide and/or lithium sulfate during the firing step.
(4) **The** method for producing lithium sulfide according to any one of (1) to (3), wherein the gas accumulation suppressing treatment is performed at 120°C to 1200°C.
(5) The method for producing lithium sulfide according to any one of (1) to (4), wherein the reducing agent containing a carbon element is at least one selected from the group consisting of carbon black, graphite, carbon fibers, activated carbon, a reducing sugar, and a polyhydric alcohol.
(6) The method for producing lithium sulfide according to any one of (1) to (5), wherein the reducing agent containing a carbon element is used such that a ratio of carbon atoms to lithium atoms is from 0.05 to 0.5 in terms of atomic molar ratio.

### Examples

Hereinafter, the present invention will be described in further detail based on examples. However, the scope of the present invention is not limited to the examples given below. Unless otherwise stated, "%" means "% by mass".

### Example 1

Lithium hydroxide (D₅₀ = 14.2 µm), sulfur (D₅₀ = 41.8 µm), and activated carbon (D₅₀ = 130.6 µm) were used as the raw materials. The amount of sulfur used was 2.0 mol of sulfur atoms per mole of lithium atoms. The amount of activated carbon used was 0.40 mol of carbon atoms per mole of lithium atoms, calculated in terms of carbon atoms.

The above-described raw materials were dry-mixed to obtain a powder mixture. The obtained powder mixture was filled into a saggar and placed in a kiln. The saggar's internal dimensions were 110 mm in width, 52 mm in depth, and 50 mm in height. The powder mixture was filled into this saggar to a thickness of 38.4 mm.

The kiln was heated from room temperature to 400°C and the low-temperature firing was performed in which that temperature was maintained for 3 hours. The firing atmosphere was nitrogen. Then, the kiln heating was stopped, and the kiln interior was cooled to room temperature. The saggar was taken out of the kiln, and the powder mixture was agitated to break the film formed on the upper surface of the powder mixture.

Subsequently, the saggar was placed in the kiln again. The kiln was heated to 900°C and the high-temperature firing was performed in which that temperature was maintained for 6 hours. During the high-temperature firing, the powder mixture was not agitated. In this manner, the desired lithium sulfide was obtained. The yield of the obtained lithium sulfide was 94.8%. No scattering or overflow of the powder mixture was observed during the firing.

### Example 2

Lithium hydroxide, sulfur, and carbon black were used as the raw materials. The amount of sulfur used was 2.0 mol of sulfur atoms per mole of lithium atoms. The amount of carbon black used was 0.4 mol of carbon atoms per mole of lithium atoms, calculated in terms of carbon atoms. Lithium sulfide was obtained in the same manner as in Example 1, except for this aspect. No scattering or overflow of the powder mixture was observed during the firing. The yield of the obtained lithium sulfide was 96.9%.

### Comparative Example 1

Lithium hydroxide, sulfur, and sucrose were used as the raw materials. The amount of sulfur used was 2.0 mol of sulfur element per mole of lithium element. The amount of sucrose used was 0.4 mol of carbon element per mole of lithium element, calculated in terms of carbon element.

The above-described raw materials were dry-mixed to obtain a powder mixture. The obtained powder mixture was filled into a saggar and placed in a kiln. The kiln was heated from room temperature to 900°C and the high-temperature firing was performed in which that temperature was maintained for 6 hours. The firing atmosphere was nitrogen. As a result, overflow of the powder mixture was observed during the firing. The yield of the obtained lithium sulfide was 69.8%.

### Industrial Applicability

As detailed above, according to the present invention, it is possible to produce lithium sulfide with high yield.

## Claims

1. A method for producing lithium sulfide, comprising:
a mixing step of preparing a powder mixture containing solid lithium hydroxide, solid sulfur, and a reducing agent containing a carbon element; and
a firing step of firing the powder mixture in an inert or reducing gas atmosphere,
wherein during the firing step, gas accumulation suppressing treatment is performed to suppress accumulation of gas generated during the firing step within the powder mixture.

2. The method for producing lithium sulfide according to claim 1, wherein the gas accumulation suppressing treatment is either:
A: breaking at least a portion of a film of lithium sulfide and/or lithium sulfate formed on an upper surface of the powder mixture during the firing step, thereby removing the gas from within the powder mixture covered by the film; or
B: suppressing formation of a film of lithium sulfide and/or lithium sulfate on the upper surface of the powder mixture during the firing step.

3. The method for producing lithium sulfide according to claim 1 or 2, wherein the gas accumulation suppressing treatment is either:
a: performing grinding or disintegration treatment on a film of lithium sulfide and/or lithium sulfate formed on an upper surface of the powder mixture during the firing step, thereby breaking at least a portion of the film; or
b: agitating the powder mixture during the firing step, thereby suppressing formation of a film of lithium sulfide and/or lithium sulfate during the firing step.

4. The method for producing lithium sulfide according to claim 1 or 2, wherein the gas accumulation suppressing treatment is performed at 120°C to 1200°C.

5. The method for producing lithium sulfide according to claim 1 or 2, wherein the reducing agent containing a carbon element is at least one selected from the group consisting of carbon black, graphite, carbon fibers, activated carbon, a reducing sugar, and a polyhydric alcohol.

6. The method for producing lithium sulfide according to claim 1 or 2, wherein the reducing agent containing a carbon element is used such that a ratio of carbon atoms to lithium atoms is from 0.05 to 0.5 in terms of atomic molar ratio.
